# EUROPEAN PATENT APPLICATION

(11) **EP 2 187 068 A1**
(43) Date of publication of application: **19.05.2010**
(21) Application number: 08168992.9
(22) Date of filing: 13.11.2008
(51) Int. Cl.: F16B 25/10

(54) **Self-drilling screw with multi-drilling portions**

(71) Applicant: Chan Liang Enterprise Co., Ltd, Kaohsiung County 821 (TW)
(72) Inventor: Lin, Kuo-Chang, Lujhu Township, Kaohsiung County 821 (TW)
(74) Representative: Chaillot, Geneviève

(57) **Abstract**

A self-drilling screw (3) with multi-drilling portions (33,35) comprising a shank (32), a head (31) and a drilling portion (33) separately disposed at the ends of the shank (32), and a thread section (34) spiraled on the shank (32). At least one sub-drilling portion (35) is formed between the drilling portion (33) and the thread section (34) further defining a sequence of indentations (354) and projections (355), and each indentation (354) generates a cutting surface (356) extending outwardly from one side thereof so as to converge the cutting surface (356) with the adjacent projections (355) at a cutting ridge (357). Accordingly, the application of the cutting ridges (357) and the indentations (354) facilitates the drilling portion (33) with regard to chipping accomodation and removal of redundant debris, thereby efficiently achieving a swift screwing and a lowered screwing resistance to promote the screwing efficiency.

## Description

### BACKGROUND OF THE INVENTION

### 1. Field of the Invention

The present invention relates to a self-drilling screw, in particular to a self-drilling screw including multi-drilling portions.

### 2. Description of the Related Art

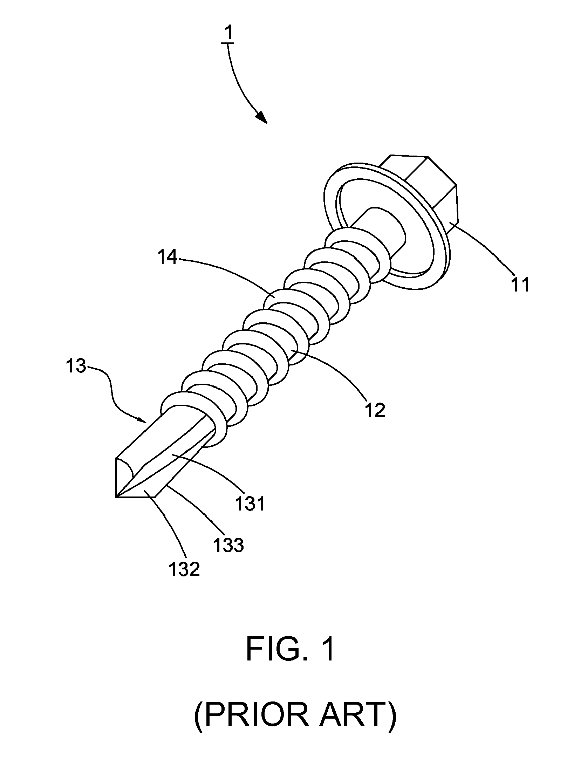

A conventional drilling screw **1** as shown in Fig. **1** comprises a head **11,** a shank **12** outwardly extended from the head **11** forming a drilling portion **13** at the distal end thereof, and a set of thread section **14** spiraling round the shank **12.** Wherein, the drilling portion **13** peripherally defines two flutes **131** (only one flute as viewed in the Fig. **1**), and a cutting surface **132** is further outwardly extended from the flute **131** so that a cutting edge **133** is formed by the convergence of the flute **131** and the adjoining cutting surface **132.** During operation, the cutting edge **132** renders a preliminary drilling to lead the succeeding thread section **14** screwing into an object (not shown) and fix the screw **1** therein.

However, in virtue of the typical punching upon the drilling portion **13** and the sole application of the flutes **131** and cutting edges **133** for processing the cutting and debris guidance, a limited accommodation of debris among the flutes **131** becomes easy to impede the extrusion of the debris in time of drilling and to incur an increment of the screwing torque, which relatively results in snapping of the screw **1.** Moreover, the length of the drilling portion **13** is chiefly decided in view of the thickness of the object. Therefore, once the drilling portion **13** is prolonged, the larger and lengthy die is required, which potentially results in the exhaustion of the die under a term of utilization and renders the high manufacturing cost.

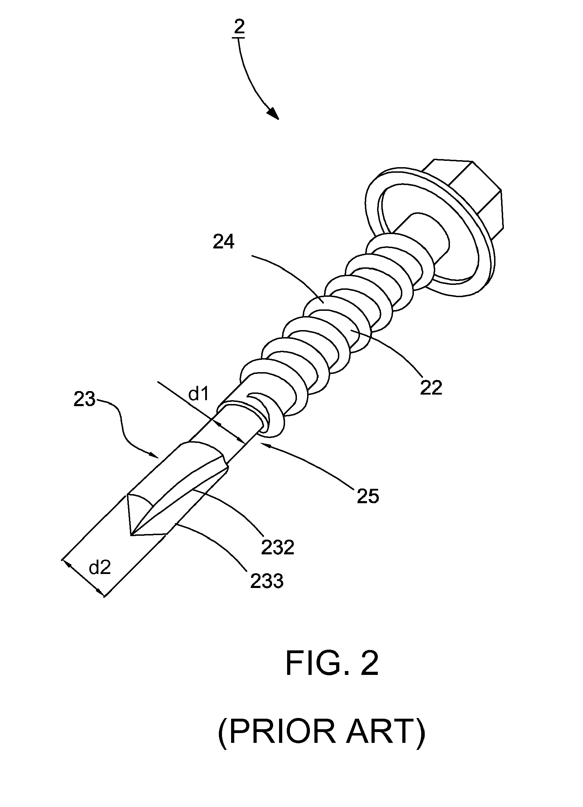

The intention of another conventional drilling screw **2** as shown in Fig. **2** was accordingly invented to remedy the shortcomings of the drilling screw **1.** The concatenation of associated elements and applications same to those of the first prior art are herein omitted. Wherein, a necking **25** is defined between a drilling portion **23** and a thread section **24,** in which an outer diameter **d1** of the necking **25** is smaller than an outer diameter **d2** of the drilling portion **23.** Approaching to the same operation as the conventional screw **1,** a cutting edge **233** on the drilling portion **23** renders a preliminary drilling to lead the succeeding shank **22** screwing into an object (not shown). The generated debris would upwardly travel along the flutes **232,** and the narrow necking **25** would allocate a clearance for assisting the further advancement of debris, which accordingly intends to diminish the obstruction of the debris in the drilling and renders a fastening capability.

Nonetheless, such necking **25** are preferred merely for purposes of the debris extrusion, decreasing part of the die length, and therefore reducing the cost of a lengthy die. Moreover, in view of the screw **2** commonly designed to engage with a thicker object (not shown), a larger supporting strength would be needed to carry the drilling portion **23** into the object. However, the thinner and fragile necking **25** with the reduced diameter **d1** would be subjected to a facile snap in view of its lower resistance unable to bear the drilling pressure, which however would decrease the screwing capability and firmness of the screw **2.** Thus, the screw **2** still fails to obviate the deficiencies of the screw **1** and requires improvements.

An object of the invention is a self-drilling screw comprising:
a head;
a shank outwardly extended from said head and spiraled throughout by a set of thread section; and
a drilling portion formed at a distal end of said shank, opposite to said head; said drilling portion having a drill bit defined thereon and at least one flute arranged on said drill bit;
   **characterized in that** a sub-drilling portion being defined between said drilling portion and said thread section; said sub-drilling portion having a sub-drill body, an upper region located approximate to an end of said thread section, and a lower region disposed near said drill bit ;
   said sub-drill body further provided with a sequence of indentations and prominent areas substantively defined between said upper and lower regions , and each indentation including a cutting surface extended upstream from one side thereof so as to form a cutting ridge by the convergence of said cutting surface with said adjacent prominent area.

Preferably, said screw includes a plurality of sub-drilling portions defined between said drilling portion and said thread section.

Preferably, said cutting ridge on said sub-drilling portion is parallel with respect to a shank axis.

Preferably, said cutting ridge on said sub-drilling portion is parallel with respect to a shank axis.

Preferably, said cutting ridge on said sub-drilling portion is inclined with respect to a shank axix.

Preferably, said cutting ridge on said sub-drilling portion is inclined with respect to a shank axis.

Preferably, an outer diameter (D1) of said upper region is larger than an outer diameter (D2) of said lower region.

Preferably, an outer diameter (D1) of said upper region is larger than an outer diameter (D2) of said lower region.

### SUMMARY OF THE INVENTION

The object of the present invention is to provide a self-drilling screw with multi-drilling portions to achieve a speedy drilling and a decreased screwing torque so as to increase the screwing efficiency.

The self-drilling screw in accordance with the present invention mainly comprises a head 31, a shank 32 outwardly extended from the head 31 forming a drilling portion 33 to be disposed opposite to the head 31, and a set of thread section 34 spiraling round the shank 32. Wherein, at least one sub-drilling portion 35 is further defined between the drilling portion 33 and the thread section 34 and comprised of a sequence of indentations 354 for rendering the performance of a plurality of cutting ridges 357. In this manner, the sub-drilling portion 35 along with the cutting ridges 357 assists the drilling portion 33 in advancing a preferable preliminary drilling and has the indentations 354 to provide an efficient extrusion of debris, therefore conducing to attaining a decreased screwing resistance and torque, achieving a rapid screwing, and promoting the screwing efficiency.

The advantages of the present invention over the known prior arts will become more apparent to those of ordinary skilled in the art by reading the following descriptions with the relating drawings.

### BRIEF DESCRIPTION OF THE DRAWINGS

Fig. **1** is a perspective view showing a conventional screw;
Fig. **2** is a perspective view showing another conventional screw;
Fig. **3** is an elevational view showing a first preferred embodiment of the present invention;
Fig. **3A** is an enlarged view showing of Fig. 3;
Fig. **4** is a schematic view showing the first preferred embodiment screwed in an object;
Fig. **5** is an elevational view showing a second preferred embodiment of the present invention;
Fig. **6** is an elevational view showing a third preferred embodiment of the present invention; and
Fig. **7** is an elevational view showing a fourth preferred embodiment of the present invention.

### DETAILED DESCRIPTION OF THE PREFERRED EMBODIMENTS

Before describing in greater detail, it should note that the like elements are denoted by the similar reference numerals throughout the disclosure.

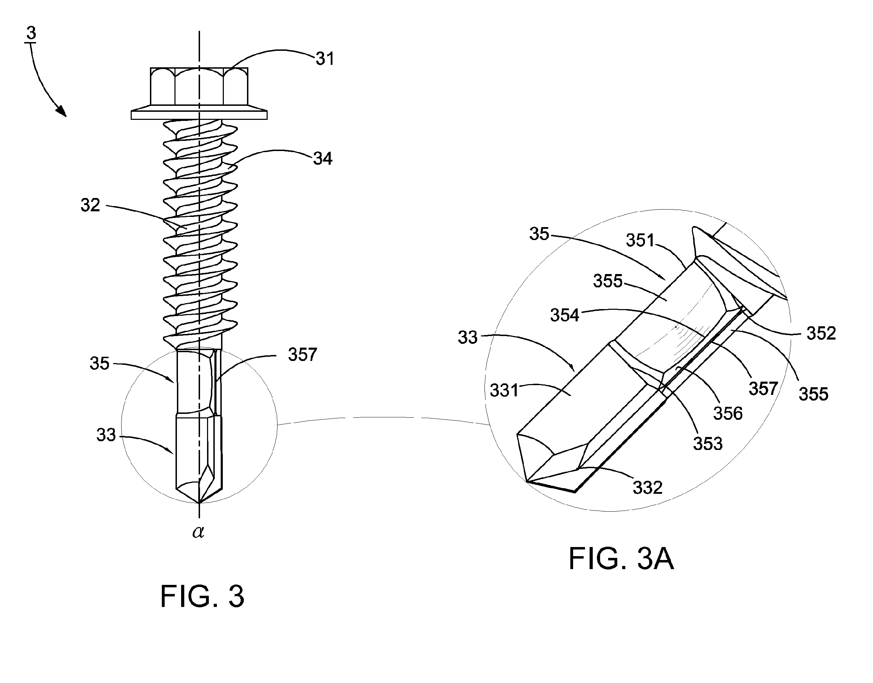

Referring to Fig. **3** showing the present invention, a self-drilling screw **3** of a first preferred embodiment comprises a head **31,** a shank **32** outwardly extended from the head **31** forming a drilling portion **33** to be disposed opposite to the head **31,** and a set of thread section **34** spiraling round the shank. Wherein, the drilling portion **33** includes a drill bit **331** defined thereon and at least one flute **322** disposed on the drill bit **331.** Particularly, a sub-drilling portion **35** is defined between the drilling portion **33** and the thread section **34.** It should be noted that the sub-drilling portion could be directly and integrally punched by a mold, which further results in a higher strength.

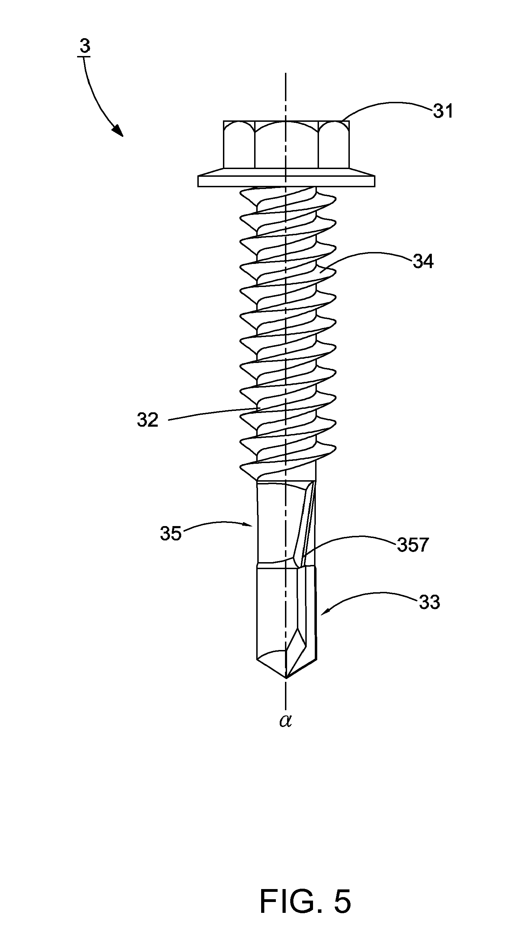

Moreover, the sub-drilling portion **35** further includes a sub-drill body **351,** an upper region **352** disposed close to the edge of the thread section **34,** and a lower region **353** adjoined with the drill bit **331;** the sub-drill body **351** provides with a sequence of indentations **354** and prominent areas **355** defined between the upper and lower regions **352, 353,** and each indentation **354** has one side thereof upstream extending to perform a cutting surface **356** so that a cutting ridge **357** is formed where the cutting surfaces **356** and the adjacent prominent area **355** meet. Further, the cutting ridge **357** is parallel to a shank axis α as plainly shown in Fig. **3****;** alternatively, it should be noted that the cutting ridge **357** could also be inclined to the axis α of the shank **32** as shown in Fig. **5****.** Herein the descriptions to the operation in this and following embodiments are mainly utilized in connection with the performance of the cutting ridge **357** being in a parallel statement.

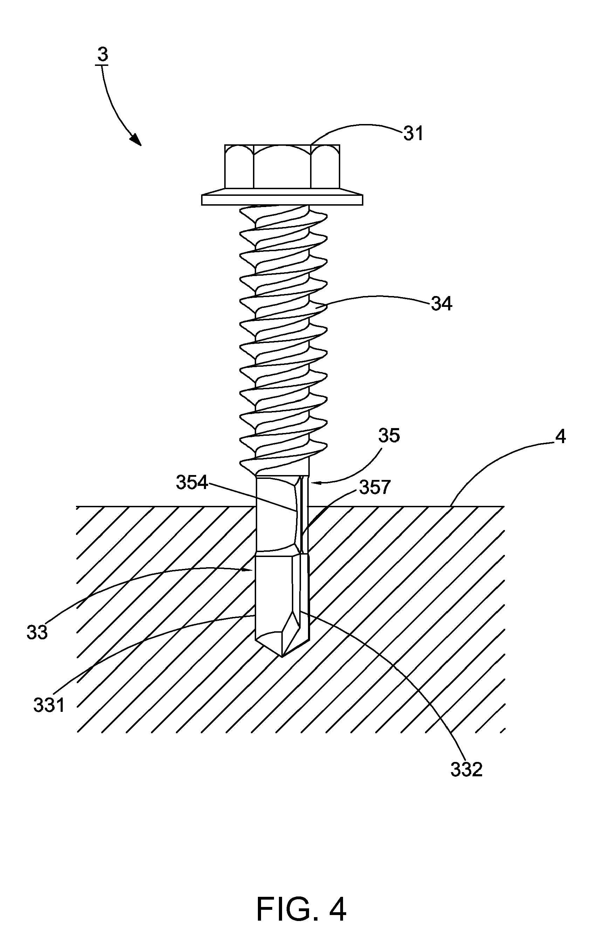

Referring to Fig. **4** showing the operation of the self-drilling screw **3,** the drill bit **331** is preliminarily drilled into an object **4** so as to gradually bring the drilling portion **33** drilling thereinto. Hereby, a snap incurred by a large screwing torque can be preferably prevented by means of the sub-drilling portion **35** possessing a constructively higher resistance. Subsequently, the sub-drilling portion **35** continuously contacts the object **4,** and the cutting ridge **357** further assists the drilling portion **33** in drilling more deeply so as to aid with the swift advancing of the succeeding thread section **34** through the object **4.** Concurrently, the debris generated during the screwing is able to be smoothly moved along the flute **332** (or from the distal end of the drilling portion **33)** toward the indentations **354** and thence extruded out. Such gradual drilling substantively prevents the debris from being over accumulated and efficiently obviates the increment of screwing resistance and torque. Therefore, it accordingly averts bluntness resulting from a long term of the screwing friction on the drill bit **331** and promotes the drilling competence.

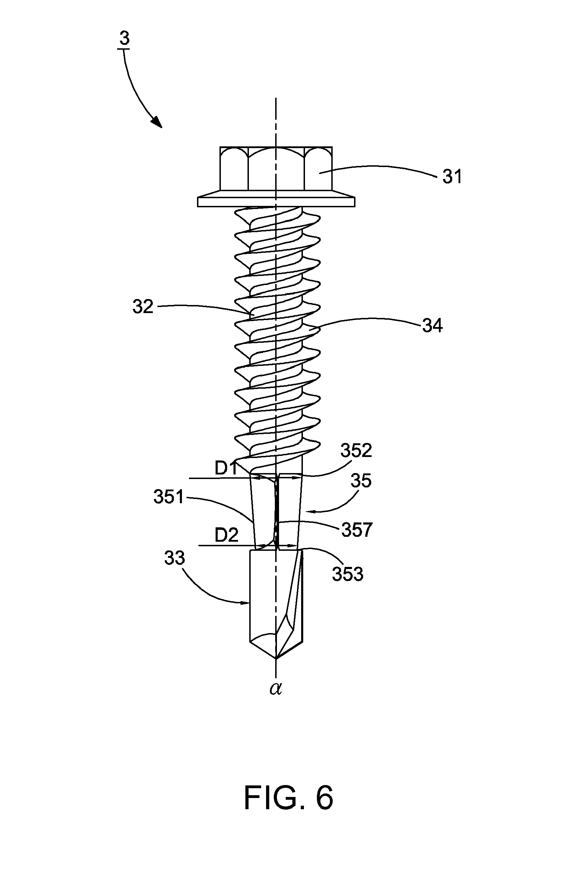

Referring to Fig. **6****,** a third preferred embodiment of the present invention also comprises a head **31,** a shank **32,** a drilling portion **33,** a set of thread section **34** and a sub-drilling portion **35.** The concatenation of correlated elements and applications same to those of the first preferred embodiment are herein omitted. This embodiment is in **characterized in that** an outer diameter **D1** of the upper region **352** is larger than an outer diameter **D2** of the lower region **353,** whereby the improvement wherein the sub-drill body **351** is of a gradual reduced diameter from the edge of the thread section **34** toward the drilling portion **33** so as to form a necking structure. Thus, a larger accommodation of debris around the sub-drilling portion **35** is further formed thereby to appropriately receive the debris and allow smoothly extruding the redundant debris out, which efficiently lessens the screwing obstruction. Besides, the gradual-reduced structure of the sub-drilling portion **35** could auxiliarily assist the drilling portion **33** in chipping debris and provide the smooth guidance of redundant debris, thereby attaining the diminished drilling resistance and debris obstruction, a swift screwing, and promoting the screwing efficiency. Please notice that the screw **3** in this embodiment is also not restricted to the performance of the cutting ridges **357** of the sub-drilling portion **35** on account of that the cutting ridge **357** is either parallel (shown in Fig. **6****)** or inclined with respect to the shank axis α (not shown) attains the same objects and purposes set forth above.

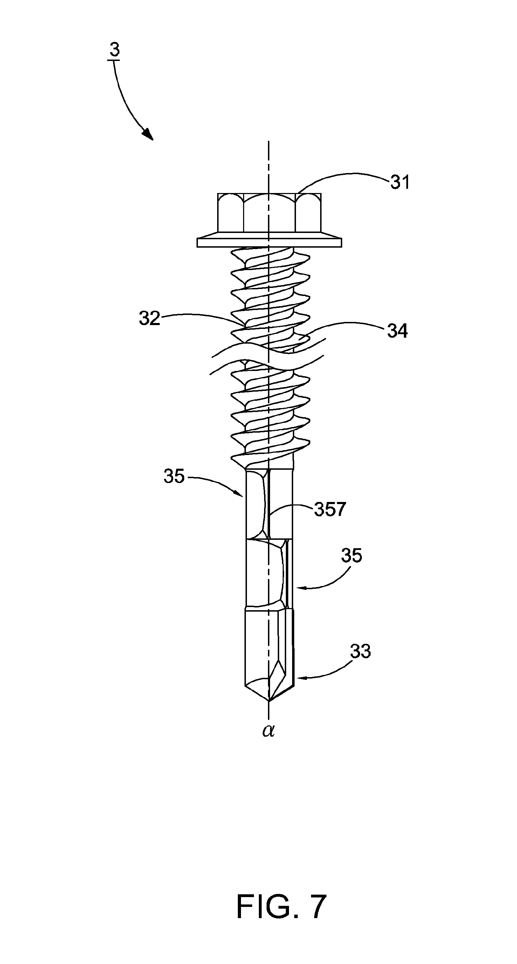

Referring to Fig. **7** showing a fourth preferred embodiment of the present invention, the self-drilling screw **3** also comprises a head **31,** a shank **32,** a drilling portion **33,** and a set of thread section **34.** In this embodiment, the screw **3** has a plurality of adjoining sub-drilling portions **35** formed between the drilling portion **33** and the thread section **34.** Herein, the subsequent illustration is according to the sub-drilling portion **35** presenting of two, and each of the sub-drilling portions **35** still includes the same concatenations of elements as the same as those of the first preferred embodiment. Further, the cutting ridges **357** in this embodiment can perform in parallel to the shank axis α, or perform to be inclined to the shank axis α (not shown). Wherein, the screw **3** of this embodiment operates equivalently to the first embodiment and attains performances of the speedy screwing, decreased torque, as well as promoted screwing efficiency.

Giving the contrary comparison of the direct punching at once in the first embodiment, those sub-drilling portions **35** of Fig. **7** are able to be discretely punched, which means a die, whose length is identical to that of one sub-drilling portion **35,** could be individually applied several times to form the joining and plural sub-drilling portions **35.** Therefore, it needs not the large dies (not shown) to implement the integral molding at once, and such separate molding correspondingly conduces to a high strength and a reduced defective rate of the products as well. Hence, a technique level can be economized and the manufacturing costs can be reduced.

To sum up, the present invention takes advantage of at least one sub-drilling portion defined between the drilling portion and the thread section to lead an auxiliary drilling and provide a substantial guidance of debris. The swift extrusion of the redundant debris is hence obtained to avert a large screwing resistance as well as torque. Therefore, a favorable screwing efficiency is thence achieved and promoted.

While we have shown and described the embodiment in accordance with the present invention, it should be clear to those skilled in the art that further embodiments may be made without departing from the scope of the present invention.

## Claims

1. A self-drilling screw (3) comprising:
a head (31) ;
a shank (32) outwardly extended from said head (31) and spiraled throughout by a set of thread section (34); and
a drilling portion (33) formed at a distal end of said shank (32) opposite to said head (31) ; said drilling portion (33) having a drill bit (331) defined thereon and at least one flute (332) arranged on said drill bit (331) ;
**characterized in that** a sub-drilling portion (35) being defined between said drilling portion (33) and said thread section (34) ; said sub-drilling portion (35) having a sub-drill body (351), an upper region (352) located approximate to an end of said thread section (34), and a lower region (353) disposed near said drill bit (331); said sub-drill body (351) further provided with a sequence of indentations (354) and prominent areas (355)substantively defined between said upper and lower regions (352), (353), and each indentation (354)including a cutting surface (356) extended upstream from one side thereof so as to form a cutting ridge (357) by the convergence of said cutting surface (356) with said adjacent prominent area (355) .

2. The self-drilling screw (3) as claimed in claim 1, wherein said screw (3) includes a plurality of sub-drilling portions (35) defined between said drilling portion (33) and said thread section (34) .

3. The self-drilling screw (3) as claimed in claim 1, wherein said cutting ridge (357) on said sub-drilling portion (35) is parallel with respect to a shank axis (α).

4. The self-drilling screw (3) as claimed in claim 2, wherein said cutting ridge (357) on said sub-drilling portion (35) is parallel with respect to a shank axis (α).

5. The self-drilling screw (3) as claimed in claim 1, wherein said cutting ridge (357) on said sub-drilling portion (35) is inclined with respect to a shank axis (α).

6. The self-drilling screw (3) as claimed in claim 2, wherein said cutting ridge (357) onsaidsub-drillingportion (35) is inclined with respect to a shank axis (α).

7. The self-drilling screw (3) as claimed in claim 1, wherein an outer diameter (D1) of said upper region (352) is larger than an outer diameter (D2) of said lower region (353) .

8. The self-drilling screw (3) as claimed in claim 2, wherein an outer diameter (D1) of said upper region (352) is larger than an outer diameter (D2) of said lower region (353) .
